(19) Europäisches Patentamt
European Patent Office
Office européen des brevets

(11) **EP 1 770 063 A1**

(12) **EUROPEAN PATENT APPLICATION**
published in accordance with Art. 158(3) EPC

(43) Date of publication:
**04.04.2007 Bulletin 2007/14**

(21) Application number: **05740950.0**

(22) Date of filing: **13.05.2005**

(51) Int Cl.:
*C01B 33/16* (2006.01)  *C01B 33/158* (2006.01)

(86) International application number:
**PCT/JP2005/009215**

(87) International publication number:
**WO 2005/110919 (24.11.2005 Gazette 2005/47)**

(84) Designated Contracting States:
**AT BE BG CH CY CZ DE DK EE ES FI FR GB GR HU IE IS IT LI LT LU MC NL PL PT RO SE SI SK TR**

(30) Priority: **14.05.2004 JP 2004144365**

(71) Applicants:
• **Dynax Corporation**
  **Chitose-shi,**
  **Hokkaido 066-8585 (JP)**
• **Nakanishi, Kazuki**
  **Kyoto-shi,**
  **Kyoto 606-0806 (JP)**

(72) Inventors:
• **NAKANISHI, Kazuki**
  **Kyoto-shi,**
  **Kyoto 606-0806 (JP)**

• **KANAMORI, Kazuyoshi**
  **Sakyo-ku,**
  **Kyoto-shi,**
  **Kyoto 606-8186 (JP)**
• **AIZAWA, Mamoru,**
  **c/o Dynax Corporation**
  **Chitose-shi,**
  **Hokkaido 066-8585 (JP)**
• **IZUMI, Hiroaki,**
  **c/o Dynax Corporation**
  **Chitose-shi, Hokkaido 066-8585 (JP)**

(74) Representative: **Hubert, Philippe et al**
  **Cabinet Beau de Loménie**
  **158, rue de l'Université**
  **75340 Paris Cédex 07 (FR)**

(54) **PROCESS FOR PRODUCING SILICA AEROGEL**

(57) Silica aerogels that are controlled in pore diameter and pore diameter distribution can be produced as follows: a surfactant is dissolved in an acidic aqueous solution; a silicon compound having a hydrolysable functional group and a hydrophobic functional group is added thereto, so that a hydrolysis reaction is carried out to yield a gel; and after the gel is solidified, the gel is dried supercritically Preferably, the surfactant is one selected from the group consisting of a nonionic surfactant, a cationic surfactant, and an anionic surfactant, or a mixture of at least two of them. The silica aerogels produced as described above are usable for heat insulators for solar-heat collector panels or heat-insulating window materials for housing.

FIG. 1

# EP 1 770 063 A1

**Description**

Technical Field

The present invention relates to processes for producing silica aerogels.

Background Art

Silica aerogels have a high porosity and an extremely low thermal conductivity. Hence, they are known as highly efficient heat insulating materials. The silica aerogels each have a high visible-light transmittance and a specific gravity as low as about 0.1. Accordingly, it has been studied to use silica aerogels for heat insulators for solar-heat collector panels or heat-insulating window materials for housing.

Generally, inorganic porous materials such as silica aerogels are produced by a sol-gel process, which utilizes a liquid phase reaction. Alcogels that are used for conventional processes for producing silica aerogels are obtained as follows. That is, a silicon compound is diluted with an alcohol solvent so that the silica content is around 4 to 5%, which then is subjected to hydrolytic polycondensation using an acid or basic catalyst. During this process, the homogeneity of alcogels is maintained through strict control of the temperature, humidity, etc. However, the pore structures are heterogeneous when observed at the nanolevel.

When a silica aerogel is used as a transparent heat insulator, in order to obtain transparency and heat insulation, pore structures with a size of 100 nm or smaller have to be formed homogeneously and the porosity must not exceed 95%. Accordingly, in the case of silica aerogels that are obtained by the sol-gel process, there have been attempts to control the pore size by controlling the reaction conditions during the gel synthesis.

However, conventional silica aerogels that are obtained by the sol-gel process are limited to those having a typical average pore diameter of not more than several nanometers and having a wide pore diameter distribution. In other words, it is not possible to control the pore size and pore diameter distribution readily. This is because since the pores are present in a network that is constrained three-dimensionally, the pore structures cannot be modified from the outside in a nondestructive manner after the gels have been prepared.

Furthermore, it has been known that the average pore diameter can be increased by using an amide coexisting material, or performing gelation in the presence of a basic catalyst when silica gels are to be produced using silicon alkoxide. However, such materials only have pores with a center pore diameter of no more than 20 nanometers and exhibit a distribution extending mainly to the side where the pore diameters are smaller.

In JP8(1996)-29952B and JP7(1995)-41374A, the present inventors have proposed, as methods for solving the above problems, processes including: dissolving a water-soluble polymer in an acid solution; subjecting it to a hydrolysis reaction by adding a metal compound having a hydrolysable functional group thereto; and heating and drying it or carrying out solvent substitution after the product is solidified.

However, the processes described in JP8(1996)-29952B and JP7(1995)-41374A, there are problems that since a water-soluble polymer is used, it takes time to prepare the reaction solution, the characteristics of the product depend on the molecular weight distribution, etc. In addition, since the step of producing a gel and the step of solvent substitution are separate steps from each other, the production processes are complicated.

In the process of drying a gel that are described in JP8(1996)-29952B and JP7(1995)-41374A, a problem occurs that the gel contracts or cracks due to the stress caused by capillary attraction inside the alcogel when a solvent is removed from the alcogel.

Disclosure of Invention

With the above in mind, the present invention is intended to provide a process for producing a silica aerogel. With the process, the silica aerogel can be provided with high mechanical strength while keeping high visible-light transmittance inherent in silica aerogels by highly reproducibly providing the silica aerogel with a pore structure having a desired center pore diameter and a narrow pore diameter distribution instead of a wide pore diameter distribution that has been inevitable in conventional silica aerogels.

The present invention has solved the above-mentioned problems by the following processes: a first process for producing a silica aerogel includes: solidifying a gel produced through hydrolysis that is carried out by adding a silicon compound hose molecules have a hydrolysable functional group and a hydrophobic functional group, to a solution containing a surfactant that has been dissolved in an acidic aqueous solution; and then drying the gel supercritically; and a second process for producing a silica aerogel includes: solidifying a gel produced through hydrolysis that is carried out by adding a silicon compound whose molecules have a hydrolysable functional group and a hydrophobic functional group to a solution containing a surfactant and a pyrolytic compound that have been dissolved in an acidic aqueous solution; modifying the microstructure of the gel by pyrolyzing the pyrolytic compound that has been dissolved in the reaction solution beforehand; and then drying the gel supercritically

Preferably, the surfactant to be used herein is one selected from the group consisting of a nonionic surfactant, a cationic surfactant, and an anionic surfactant, or a mixture of at least two of them.

Preferably, the nonionic surfactant includes a hydrophilic moiety such as polyoxyethylene and a hydrophobic moiety that consists mainly of an alkyl group. It is preferable that the nonionic surfactant be polyoxyethylene nonylphenyl ether or polyoxyethylene octylphenyl ether.

Preferably, the cationic surfactant is cetyltrimethylammonium bromide or cetyltrimethylammonium chloride. It also is preferable that the anionic surfactant be sodium dodecyl sulfonate.

Brief Description of Drawings

FIG. 1 is a scanning electron microscope photograph showing the pore structure inside a silica aerogel of Sample MN21018 according to Example 1.
FIG. 2 is a scanning electron microscope photograph showing the pore structure inside a silica aerogel of Sample MN21020 according to Example 1.
FIG. 3 is a scanning electron microscope photograph showing the pore structure inside a silica aerogel of Sample MN21022 according to Example 1.
FIG. 4 is a scanning electron microscope photograph showing the pore structure inside a silica aerogel of Sample TF14 according to Example 2.
FIG. 5 is a scanning electron microscope photograph showing the pore structure inside a silica aerogel of Sample MM01 according to Comparative Example 1.
FIG. 6 is a scanning electron microscope photograph showing the pore structure inside a silica aerogel of Sample MM02 according to Comparative Example 1.
FIG. 7 is a scanning electron microscope photograph showing the pore structure inside a silica aerogel of Sample MM04 according to Comparative Example 1.

Description of the Invention

Hereafter, the present invention is described in detail. The first and second processes for producing a silica aerogel of the present invention are carried out by the sol-gel process that allows the pore structure to be controlled most effectively.

The first process for producing a silica aerogel of the present invention includes: solidifying a gel produced through hydrolysis that is carried out by adding a silicon compound whose molecules have a hydrolysable functional group and a hydrophobic functional group, to a solution containing a surfactant that has been dissolved in an acidic aqueous solution; and then drying the gel supercritically.

A silicon compound whose molecules have a hydrolysable functional group and a hydrophobic functional group is used as the silicon compound that is a starting material to be used in the sol-gel process.

In a material whose molecules have a hydrophilic, hydrolysable functional group and a hydrophobic functional group, the respective groups have affinities to a hydrophilic solvent and a hydrophobic solvent in the solution, respectively. This allows a fine phase separation structure to be formed at the mesoscopic level.

The silicon compound is preferably alkyl silicon alkoxide. Particularly, when a silica aerogel is produced using methyltrimethoxysilane, pore structures that are 100 nm or smaller can be formed homogeneously.

Examples of alkyl silicon alkoxide that can be expected to provide a similar effect to that to be provided by methyltrimethoxysilane include dimethyldimethoxysilane, bistrimethylsilylmethane, bistrimethylsilylethane, bistrimethylsilylhexane, ethyltrimethoxysilane, and vinyltrimethoxysilane.

The surfactant to be added to the silicon compound can be either a nonionic surfactant or an ionic surfactant. The ionic surfactant is preferably a cationic surfactant or an anionic surfactant.

Such surfactants are materials that induce the sol-gel transition and phase separation processes simultaneously. These surfactants each allow the solution to be separated into a solvent-rich phase and a skeleton phase and to gel at the same time.

The nonionic surfactant is preferably, but is not limited to, one containing a hydrophilic moiety such as polyoxyethylene and a hydrophobic moiety that consists mainly of an alkyl group, for example, polyoxyethylene nonylphenyl ether, polyoxyethylene octylphenyl ether, polyoxyethylene alkyl ether, or one containing polyoxypropylene as a hydrophilic moiety, for example, polyoxypropylene alkyl ether.

The cationic surfactant to be used herein is preferably cetyltrimethylammonium bromide or cetyltrimethylammonium chloride.

Preferably, the anionic surfactant to be used herein is sodium dodecyl sulfonate.

The amount of the surfactant to be added is 0.1 to 10.0 g, preferably 0.5 to 6.0 g with respect to 10 g of silicon compound, although it depends on the type of the surfactant as well as the type and amount of the silicon compound. These surfactants can be used individually, or a mixture of two or more of them can be used.

The second process for producing a silica aerogel of the present invention includes: solidifying a gel produced through hydrolysis that is carried out by adding a silicon compound whose molecules have a hydrolysable functional group and a hydrophobic functional group, to a solution containing a surfactant and a pyrolytic compound that have been dissolved in an acidic aqueous solution; modifying the microstructure of the gel by pyrolyzing the pyrolytic compound that has been dissolved in the solution beforehand; and then drying the gel supercritically

The silicon compound and surfactant to be used in the second process can be identical to those to be used in the first process.

The pyrolytic compound that coexists in the surfactant can be urea, or organic amides such as formamide, N-methylformamide, N,N-dimethylformamide, acetamide, N-methylacetamide, N,N-dimethylacetamide, etc. However, since the pH value of the solvent after heating is an important condition, the pyrolytic compound is not particularly limited as long as it allows the solvent to have basicity after pyrolysis. In addition, like hydrofluoric acid, those that produce compounds having a property that allows silica to dissolve by pyrolysis also can be used. When the pyrolytic compound to coexist is urea, the amount thereof is, for example, 0.1 to 10.0 g, preferably 0.2 to 2.0 g with respect to 10 g of the reaction solution, although it depends on the type of the compound. In the case of urea, it is preferable that the heating temperature be 60 to 200°C and the pH value of the solvent after heating be 9.0 to 11.0.

When the surfactant and pyrolytic compound are dissolved in an acid aqueous solution and then this is hydrolyzed by adding the above-mentioned silicon compound having a hydrolysable functional group and a hydrophobic functional group, a gel is produced that has been separated into a solvent-rich phase and a skeleton phase. After the gel is solidified, the gel is aged over a suitable period of time. Thereafter, the humid gel is heated, so that the pyrolytic compound that has been dissolved in the reaction solution beforehand is pyrolyzed. This increases the pH of the solvent that is in contact with the inner wall surface of the skeleton phase. The solvent then erodes the inner wall surface to change the irregularity of the inner wall surface. As a result, the pore diameters increase gradually

In the case of a gel containing silica as its main component, the degree of the change is very small in the acidic or neutral region. However, as the pyrolysis occurs actively and thereby the basicity of the aqueous solution increases, the portions that form pores dissolve and then deposit on flatter regions again. Accordingly, the reaction that allows the average pore diameter to increase occurs prominently.

In a gel that does not have macropores but has pores alone that are constrained three-dimensionally, a fair percentage of original pore structures remain since the elution material cannot diffuse to the outside solution even in the portion that can dissolve in terms of the equilibrium condition. On the other hand, in a gel having a solvent-rich phase that forms macropores, many pores are constrained only two-dimensionally. Accordingly, since the interchange of materials between the outside aqueous solution and the gel occurs sufficiently and frequently, small pores disappear in parallel with the development of macropores and the pore diameter distribution as a whole does not expand considerably.

In the heating process, it is effective that the gel is placed under a hermetically sealed condition, so that the vapor pressure of the pyrolysate saturates and thereby the pH of the solvent is allowed to reach a steady-state value quickly.

The period of time for the heat treatment that is required to obtain pore structures corresponding to a steady state that the dissolution/redeposition reaction reaches varies with the size of macropores and the volume of materials. Accordingly, it is necessary to determine the shortest treatment time at which the pore structures substantially stop changing under each treatment condition. For example, the heat treatment time is preferably at least four hours at a heating temperature of 60 to 200°C in the case of using urea as the pyrolytic compound to coexist.

The gel that have been treated is dried by the supercritical drying process. Thus a target silica aerogel can be obtained. The supercritical drying generates no gas-liquid interface that causes capillarity The supercritical drying therefore is an essential technique in the aerogel production. In the case of a conventional gel with heterogeneous pores, there has been a problem that it is damaged by stress that is caused during the solvent exchange even if the supercritical drying is carried out. However, since the gels that are produced by the first and second processes of the present invention have homogeneous pore structures, no such stress as described above is caused.

The silica aerogels obtained by the first and second processes of the present invention have through-holes that have diameters of at least 30 nm and are contiguous to each other in the form of a three-dimensional network. When the through-holes have diameters of at least 30 nm, both high transparency and high mechanical strength of the silica aerogel can be obtained. Examples of the intended uses of the silica aerogels include, but are not limited to, transparent insulators for solar-heat collectors, transparent heat-insulating window materials for buildings, transparent sound insulators for buildings, etc.

Hereinafter, the present invention is described in detail using examples but is not limited to these examples.

First, with respect to silica aerogels (Examples 1 and 2 as well as Comparative Example 1) that were produced by the following processes under the conditions described below, the pore diameter distribution was measured.

Example 1

First, 9.5 g of methyltrimethoxysilane (manufactured by Shin-Etsu Chemical Co., Ltd., LS-530, hereinafter abbreviated as "MTMS") and 5.0 g of polyethylene glycol (10) nonylphenyl ether (manufactured by NOF CORPORATION, NS210, hereinafter abbreviated as "NS210"), which was used as a nonionic surfactant, were mixed together and were dissolved uniformly. Thereafter, with the solution being stirred under freezing conditions, a 1-mol/L nitric acid aqueous solution was added thereto to cause a hydrolysis reaction. In this state, this was stirred under the freezing conditions for five minutes. In this step, the amount of the aqueous nitric acid solution was varied so that the ratio of MTMS: NS210 : $H_2O$ was 1 : 0.1 : (1.8, 2.0, or 2.2). Hereinafter, according to the mole ratio of water added to each solution, the solutions were referred to as MN21018, MN21020, and MN21022, respectively. Thereafter, they were allowed to stand still in an airtight container at 40°C and thereby were gelled. After being gelled, they were allowed to stand still at 40°C under an airtight condition for 39 hours. Thus the gels were aged. Subsequently, the humid gels that were not subjected to drying were immersed in 2-propanol and thereby were subjected to solvent substitution. This operation was carried out twice. The first operation was carried out at 60°C for 24 hours. The second operation was carried out at 60°C for 49 hours after the 2-propanol was exchanged.

The supercritical drying was carried out as follows.

An autoclave whose volume was about 400 mL was filled with 2-propanol and then the gel samples MN21018, MN21020, and MN21022 were put thereinto.

After the cover was shut, liquefied carbonic acid gas was fed thereinto and thereby a pressure of approximately 90 kgf/cm$^2$ was maintained. In this state, the first liquid-phase substitution was carried out. (Time required for this operation: 1.5 hours)

After the completion of the first liquid-phase substitution, the valve was tightened firmly so that the pressure was maintained as much as possible. In this state, it was allowed to stand for about 17.5 hours and thereby alcohol contained in the gels was allowed to diffuse.

Thereafter, the second liquid-phase substitution was carried out in the same manner as in the first liquid-phase substitution, while a pressure of approximately 90 kgf/cm$^2$ was maintained. (Time required for this operation: 1 hour)

After the completion of the second liquid-phase substitution, the valve was tightened firmly as in the first liquid-phase substitution. In this state, it was allowed to stand for about five hours, and thereby alcohol contained in the gels was allowed to diffuse.

Thereafter, the third liquid-phase substitution was carried out in the same manner. (Time required for this operation: 0.75 hour)

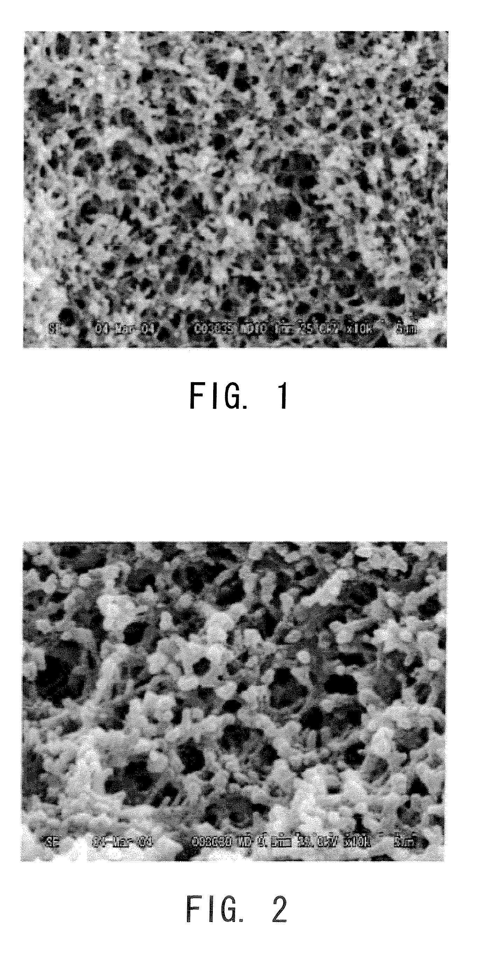

After the completion of the third liquid-phase substitution, the valve was tightened firmly and then the autoclave was heated. In this step, the temperature was raised from room temperature to 80°C over a period of 1.5 hours. After it was confirmed that the temperature had been raised to 80°C, the pressure was released at a rate of 0.5 kgf/cm$^2$· min. After the pressure was released to reach atmospheric pressure, it was cooled from 80°C to room temperature over a period of 2 hours. Thereafter, the autoclave was opened and the samples were taken out. Thus the supercritical drying was completed. The pore diameter distributions of the samples having no cracks after the supercritical drying were determined by the mercury penetration method. Thus, the following results were obtained. FIGs. 1 to 3 show the scanning electron microscope photographs of the respective samples.

MN21018: Whole pore volume: 1.83 ml/g, Center pore diameter: 0.44 μm, and Porosity: 70%

MN21020: Whole pore volume: 2.37 ml/g, Center pore diameter: 0.59 μm, and Porosity: 75%

MN21022: Whole pore volume: 1.84 ml/g, Center pore diameter: 0.42 μm, and Porosity: 70%

These results show that silica aerogels that have a porosity as high as 70% or more after the supercritical drying operation is carried out using carbonic acid gas can be manufactured by simultaneously inducing the sol-gel transition and phase separation through the addition of a surfactant.

Example 2

First, 1.819 g of 1-mol/L nitric acid aqueous solution, 7.315 g of formamide, and 5.0 g of nonionic surfactant NS210 were mixed together and were dissolved uniformly. Thereafter, with the solution being stirred under freezing conditions, 10.32 g of tetramethoxysilane (manufactured by Shin-Etsu Chemical Co., Ltd., LS-540, hereinafter abbreviated as "TMOS") was added to the solution to cause a hydrolysis reaction. In this state, this was stirred under the freezing conditions for five minutes. In this case, the mole ratio of TMOS : formamide : $H_2O$ was 1 : 2.4 : 1.4. This composition is referred to as "TF14". Thereafter, it was allowed to stand still in an airtight container at 40°C and thereby was gelled. After being gelled, it was allowed to stand still at 80°C under an airtight condition for 48 hours. Thus the gels were aged.

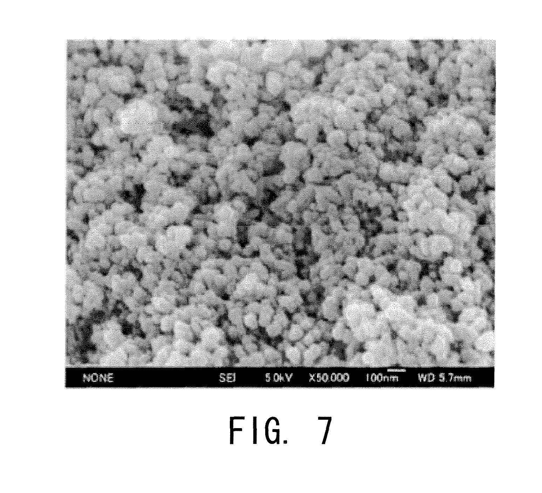

Thereafter the supercritical drying operation was carried out in the same manner as in Example 1. The pore diameter distribution of the sample having no cracks after the supercritical drying was determined by the mercury penetration method. Thus, the following results were obtained. FIG. 7 shows the scanning electron microscope photograph of the sample.

TF14: Whole pore volume: 2.16 ml/g, Center pore diameter: 0.47 $\mu$m, and Porosity: 73%

This result shows that silica aerogels that have a porosity as high as 70% or more after the supercritical drying operation is carried out using carbonic acid gas can be manufactured by simultaneously inducing the sol-gel transition and phase separation through the addition of a surfactant and further adding a material that allows the solvent to have basicity after the pyrolysis.

Comparative Example 1

Gels having similar microstructures to those obtained in Example 1 were produced by adjusting the solvent compositions without using any surfactant. Then the supercritical drying operation was carried out.

First, a 1-mol/L nitric acid aqueous solution and methanol (MeOH) were mixed together. Thereafter, with the solution being stirred under freezing conditions, MTMS was added thereto to cause a hydrolysis reaction. In this state, this was stirred under the freezing conditions for five minutes. In this step, the amount of the aqueous nitric acid solution was varied so that the ratio of MTMS : MeOH : $H_2O$ was 1: (0.1, 0.2, or 0.4) : 2.0. Hereinafter, according to the mole ratio of methanol added thereto, the solutions were referred to as MM01, MM02, and MM04, respectively. Thereafter, they were allowed to stand still in an airtight container at 40°C and thereby were gelled. After being gelled, they were aged at the same temperature for 24 hours. Subsequently, the solvent was substituted by 2-propanol in the same manner as in Example 1. The supercritical drying operation and conditions were the same as in Example 1.

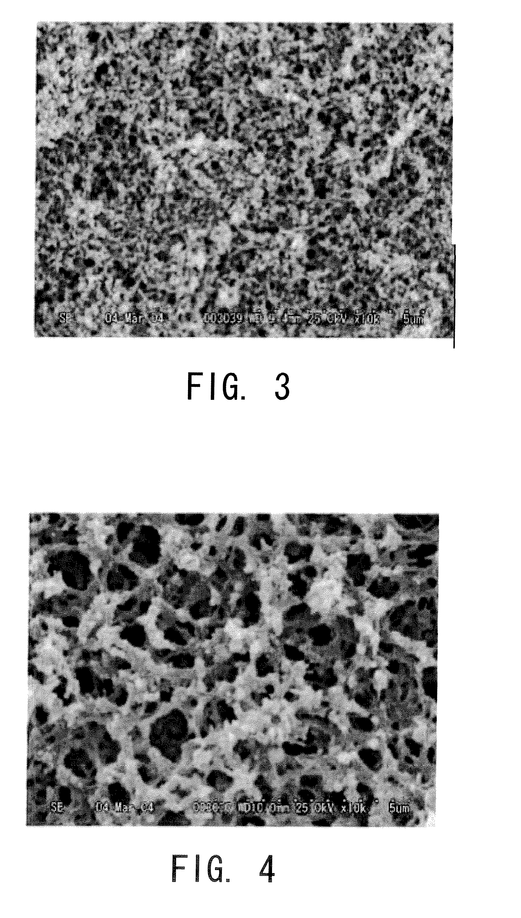

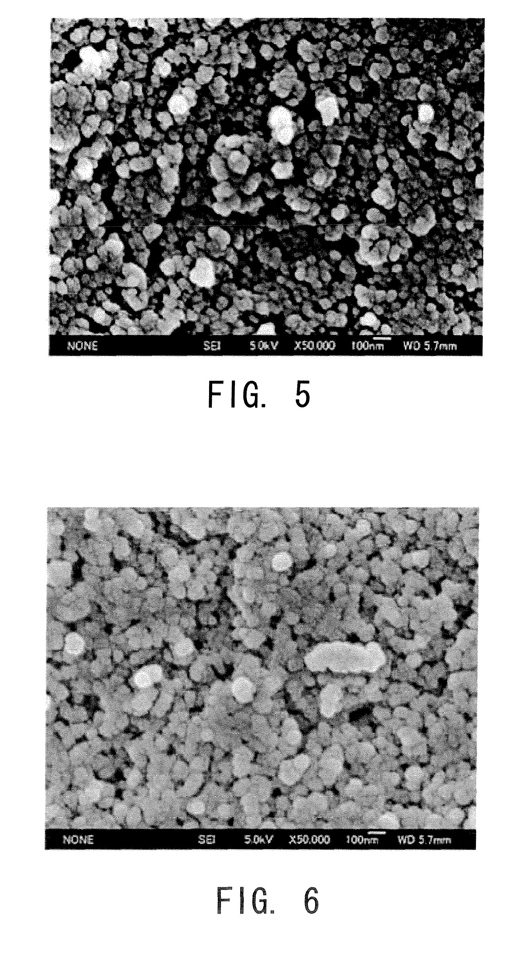

The pore diameter distributions of the samples having no cracks after the supercritical drying were determined by the mercury penetration method. Thus, the following results were obtained. FIGs. 4 to 6 show the scanning electron microscope photographs of the respective samples.

MM01: Whole pore volume: 0.59 ml/g, Center pore diameter: 0.0762 $\mu$m, and Porosity: 40%

MM02: Whole pore volume: 0.52 ml/g, Center pore diameter: 0.0763 $\mu$m, and Porosity: 43%

MM04: Whole pore volume: 0.56 ml/g, Center pore diameter: 0.0787 $\mu$m, and Porosity: 41%

When the sol-gel transition and phase separation were induced simultaneously through the addition of methanol, only porous gels having a porosity as low as around 40% were produced after the supercritical drying operation that was carried out using carbonic acid gas. This is because when the solvent is substituted by 2-propanol before the supercritical drying operation, the 2-propanol infiltrates the gel network and causes the network to swell, and thus the strength of the network is impaired considerably when the solvent is removed in the supercritical state.

Next, the silica aerogels (Examples 3 to 7 and Comparative Examples 2 and 3) produced by the following methods under the conditions described below were evaluated with respect to their optical transparency, mechanical strength, and insulating characteristics.

Example 3

First, 1.00 g of cetyltrimethylammonium bromide (also known as hexadecyltrimethylammonium bromide: manufactured by NACALAI TESQUE, INC., hereinafter abbreviated as "CTAB") was dissolved in 10.00 g of 0.001-mol/L acetic acid aqueous solution. Thereafter, 0.50 g of urea (manufactured by NACALAI TESQUE, INC.) further was added thereto and was dissolved therein. After 5.0 g of MTMS was added thereto, it was allowed to undergo a hydrolysis reaction by stirring and mixing it under freezing conditions for 30 minutes. Thereafter, it was allowed to stand still in an airtight container at 60°C and thereby was gelled. Successively, it was allowed to stand still for 96 hours. Thus the gel was aged. Subsequently, the alcogel was taken out of the airtight container. It was immersed in 2-propanol and thereby was subjected to the solvent substitution. This operation was carried out twice. The first operation was carried out at 60°C for 24 hours. The second operation was carried out at 60°C for 48 hours after the 2-propanol was exchanged.

Thereafter, the supercritical drying was carried out under the same conditions as those employed in Example 1. Thus a silica aerogel was obtained.

Example 4

An alcogel was produced in the same manner as in Example 3 except that the cationic surfactant was changed from CTAB used in Example 3 to cetyltrimethylammonium chloride (also know as hexadecyltrimethylammonium chloride; manufactured by NACALAI TESQUE, INC., hereinafter abbreviated as "CTAC"). Thereafter, the supercritical drying was carried out under the same conditions as those employed in Example 1. Thus a silica aerogel was obtained.

Example 5

An alcogel was produced in the same manner as in Example 3 except that the surfactant used in Example 3 was changed to sodium dodecyl sulfonate (manufactured by NACALAI TESQUE, INC., hereinafter abbreviated as "SDS"), which was an anionic surfactant. Thereafter, the supercritical drying was carried out under the same conditions as those employed in Example 1. Thus a silica aerogel was obtained.

Example 6

An alcogel was produced in the same manner as in Example 3 except that the surfactant used in Example 3 was changed to Poly(ethylene glycol)-block-poly(propylene glycol)-block-poly(ethylene glycol) (manufactured by BASF, F-127 (E0108P070E0108 Mw:12600)), which was a nonionic surfactant. Thereafter, the supercritical drying was carried out under the same conditions as those employed in Example 1. Thus a silica aerogel was obtained.

Example 7

An alcogel was produced in the same manner as in Example 3 except that the amount of urea to be added was changed from 0.5 g to 2.5 g. Thereafter, the supercritical drying was carried out under the same conditions as those employed in Example 1. Thus a silica aerogel was obtained.

Comparative Example 2

An alcogel was produced in the same manner as in Example 3 except that the silicon compound used in Example 3 was changed from MTMS to tetraethoxysilane (manufactured by NACALAI TESQUE, INC., hereinafter abbreviated as "TEOS"). Thereafter, the supercritical drying was carried out under the same conditions as those employed in Example 1. Thus silica aerogels were obtained.

Comparative Example 3

An alcogel was produced in the same manner as in Example 3 except that the surfactant used in Example 3 was not added. Thereafter, the supercritical drying was carried out under the same conditions as those employed in Example 1. Thus a silica aerogel was obtained.

Determination of Pore Diameter Distribution

With respect to the silica aerogels obtained after the supercritical drying in Examples 3 to 7 and Comparative Examples 2 and 3, the density, center pore diameter, and porosity were measured by the mercury penetration method. The measurement results are provided in Table 1.

Measurement of Optical Transmittance

In order to evaluate the optical transparency of the silica aerogels obtained after the supercritical drying in Examples 3 to 7 and Comparative Examples 2 and 3, the optical transmittance thereof was measured. In order to allow each silica aerogel to have an upper surface and a lower surface in parallel with each other, the silica aerogel was shaped with sandpaper of at least #1500 as needed.

The ultraviolet-visible spectrophotometer used herein was the spectrophotometer V-530 manufactured by JASCO Corporation. It was set as follows: photometric mode: %T, response: fast, band width: 2.0 nm, scan rate: 2000 nm/min, range of measurement wavelengths: 1000 nm to 200 nm, and data capture interval: 2.0 nm.

With respect to the optical transmittance, data obtained with a wavelength of 550 nm (visible light) were employed and then were corrected into the value to be obtained when the silica aerogels had a thickness of 10 mm. The transmittance $Tc$ after the thickness correction is expressed as the following formula obtained by varying Lambert's formula.

$$Tc = 10^{(log(T/100) \times 10/d)} \times 100$$

In the above formula, $T$ denotes the transmittance (%) obtained before the correction, while $d$ denotes the thickness of the sample. The measurement results are shown in Table 1.

Measurement of Bulk Modulus

In order to evaluate the mechanical strength of the silica aerogels obtained after the supercritical drying in Examples 3 to 7 and Comparative Examples 2 and 3, the bulk modulus and the maximum point stress were measured.

The silica aerogels each were shaped into a cube (a dice shape) whose sides are 7.5 mm. The device used herein was EZTest manufactured by Shimadzu Corporation. A 10-mmF jig for compression measurement was used for the measurement of the bulk modulus. The load cell employed 500 N.

Each sample was placed on the jig and the compression was carried out at a rate of 1 m/min. The measurement was stopped at the time either when the sample was broken or when the load exceeded 500 N.

The measurement items were the bulk modulus (10 to 20 N) and the maximum point stress (at the time either when the sample was broken or when the load exceeded 500 N).

Measurement of Thermal Conductivity

In order to evaluate the insulating characteristics of the silica aerogels obtained after the supercritical drying in Examples 3 to 7 and Comparative Examples 2 and 3, the thermal conductivity was measured.

The aerogels each were shaped into a 1-mm thick sheet. The guarded thermal conductivity measuring device used herein was a thermal conductivity instrument GH-1 manufactured by ULVAC-RIKO, Inc.

The sample was sandwiched between an upper heater and a lower heater with a load of 0.3 MPa. Then the temperature difference $\Delta T$ was provided to allow a guarded heater to cause one-dimensional thermal flow. In this state, the thermal resistance $Rs$ of the sample was determined by using the following formula:

$$Rs = N((T_U - T_L)/Q) - R_O,$$

where $T_U$ denotes the sample upper surface temperature, $T_L$ indicates the sample lower surface temperature, $R_O$ denotes the thermal contact resistance of the interface between the upper portion and the lower portion, and $Q$ indicates the output power of a heat flow meter. Furthermore, $N$ denotes a proportionality coefficient and is determined beforehand using a calibration material.

The thermal conductivity $\lambda$ of the sample is determined according to the following formula:

$$\lambda = d / Rs,$$

where $d$ denotes the thickness of the sample. The measurement results are indicated in Table 1.

Table 1

| | Surfactant | | Acetic Acid Aqueous Solution | Si Raw Material | | Urea [g] |
| | Type | (Amount to add) [g] | (Amount to add) [g] | Type | (Amount to add) [g] | |
|---|---|---|---|---|---|---|
| Example 3 | CTAB | 1.0 | 10 | MTMS | 5.0 | 0.5 |
| Example 4 | CTAC | 1.0 | 10 | MTMS | 5.0 | 0.5 |
| Example 5 | SDS | 1.0 | 10 | MTMS | 5.0 | 0.5 |
| Example 6 | F-127 | 1.0 | 10 | MTMS | 5.0 | 0.5 |
| Example 7 | CTAB | 1.0 | 10 | MTMS | 5.0 | 2.5 |
| Comparative Example 2 | CTAB | 1.0 | 10 | TEOS | 5.0 | 0.5 |
| Comparative Example 3 | – | – | 10 | MTMS | 5.0 | 0.5 |

Table 1 (continuation)

| | Density [g/cm³] | Center Pore Diameter [nm] | Porosity [%] | Visible-Light Transmittance (550 nm) [%] | Bulk Modulus [MPa] | Maximum Point Stress [MPa] | Thermal Conductivity [W/m·K] |
|---|---|---|---|---|---|---|---|
| Example 3 | 0.24 | 53 | 87 | 62.8 | 7.41 | 8.17 | 0.021 |
| Example 4 | 0.24 | 55 | 84 | 60.8 | 2.05 | 8.21 | 0.021 |
| Example 5 | 0.26 | 61 | 78 | 48.7 | 3.82 | 9.45 | 0.023 |
| Example 6 | 0.21 | 53 | 86 | 59.8 | 3.84 | 8.67 | 0.019 |
| Example 7 | 0.17 | 36 | 90 | 87.5 | 1.87 | 8.14 | 0.015 |
| Comparative Example 2 | 0.17 | 482 | 72 | 6.4 | 2.68 | 0.66 | 0.032 |
| Comparative Example 3 | 0.59 | 79 | 41 | 5.6 | 1.95 | 0.74 | 0.072 |

With reference to Examples 3 to 7 indicated in Table 1, it can be understood that in any cases of using the nonionic surfactant, cationic surfactant, and anionic surfactant, silica aerogels can be produced that have a center pore diameter of about 30 nm to 60 nm and a porosity of 70% or more. As a result, as compared to the comparative examples, they have higher visible-light transmittance, bulk modulus, and maximum point stress as well as lower thermal conductivity. Accordingly, it is possible to improve the transparency, mechanical strength, and thermal insulation properties as compared to those of conventional aerogels.

In Comparative Example 2 in which tetraethoxysilane was used as the silicon compound, since the aerogel has a larger center pore diameter than those of the examples, the visible-light transmittance and the maximum point stress are lower than those of the examples.

Furthermore, it was proved that in Comparative Example 3 to which no surfactant was added, the porosity was lower than those of the examples and accordingly, all the transparency, mechanical strength, and thermal insulation properties are lower than those of Examples.

Industrial Applicability

According to the present invention, it is possible to control the pore diameter and pore diameter distribution of the pores inside silica aerogels. Thus the present invention makes it possible to obtain silica aerogels that have desired pore diameters and homogeneous pore distributions. Accordingly, silica aerogels can have improved mechanical strength while having visible-light transparency inherent therein. Thus they can be used for heat insulators for solar-heat collector panels or heat-insulating window materials for housing.

**Claims**

1. A process for producing a silica aerogel, the process comprising:

   solidifying a gel produced through hydrolysis that is carried out by adding a silicon compound whose molecules have a hydrolysable functional group and a hydrophobic functional group, to a solution containing a surfactant that has been dissolved in an acidic aqueous solution; and
   then drying the gel supercritically

2. A process for producing a silica aerogel, the process comprising:

   solidifying a gel produced through hydrolysis that is carried out by adding a silicon compound whose molecules have a hydrolysable functional group and a hydrophobic functional group, to a solution containing a surfactant and a pyrolytic compound that have been dissolved in an acidic aqueous solution;
   modifying a microstructure of the gel by pyrolyzing the pyrolytic compound that has been dissolved in the solution; and
   then drying the gel supercritically

3. The process for producing a silica aerogel according to claim 1 or 2, wherein the silicon compound whose molecules have the hydrolysable functional group and the hydrophobic functional group is methyltrimethoxysilane.

4. The process for producing a silica aerogel according to any one of claims 1 to 3, wherein the surfactant is one selected from the group consisting of a nonionic surfactant, a cationic surfactant, and an anionic surfactant, or a mixture of at least two of them.

5. The process for producing a silica aerogel according to claim 4, wherein the surfactant comprises the nonionic surfactant that comprises a hydrophilic moiety such as polyoxyethylene and a hydrophobic moiety that consists mainly of an alkyl group.

6. The process for producing a silica aerogel according to claim 5, wherein the surfactant comprises the nonionic surfactant that is polyoxyethylene nonylphenyl ether or polyoxyethylene octylphenyl ether.

7. The process for producing a silica aerogel according to claim 4, wherein the surfactant comprises the cationic surfactant that is cetyltrimethylammonium bromide or cetyltrimethylammonium chloride.

8. The process for producing a silica aerogel according to claim 4, wherein the surfactant comprises the anionic surfactant that is sodium dodecyl sulfonate.

FIG. 1

FIG. 2

FIG. 3

FIG. 4

EP 1 770 063 A1

FIG. 5

FIG. 6

NONE          SEI     5 0kV    X50.000    100nm    WD 5.7mm

FIG. 7

## INTERNATIONAL SEARCH REPORT

| | International application No. |
|---|---|
| | PCT/JP2005/009215 |

A. CLASSIFICATION OF SUBJECT MATTER
Int.Cl$^7$  C01B33/16, 33/158

According to International Patent Classification (IPC) or to both national classification and IPC

B. FIELDS SEARCHED

Minimum documentation searched (classification system followed by classification symbols)
Int.Cl$^7$  C01B33/00-33/193

Documentation searched other than minimum documentation to the extent that such documents are included in the fields searched
Jitsuyo Shinan Koho        1922-1996   Jitsuyo Shinan Toroku Koho    1996-2005
Kokai Jitsuyo Shinan Koho   1971-2005   Toroku Jitsuyo Shinan Koho    1994-2005

Electronic data base consulted during the international search (name of data base and, where practicable, search terms used)
JSTPlus(JOIS)

C. DOCUMENTS CONSIDERED TO BE RELEVANT

| Category* | Citation of document, with indication, where appropriate, of the relevant passages | Relevant to claim No. |
|---|---|---|
| P,Y<br>P,A | Omohiro KANAMORI et al., "3-kannosei Alkoxysilane o Shuppatsu Genryo to suru Shinki Yuki Shushoku Silica Aerogel no Sakusei", CSJ: The Chemical Society of Japan Dai 85 Shunki Nenkai-Koen Yokoshu I, 2005, March, page 143 | 1-4,7<br>5,6,8 |
| Y<br>A | RUYAT, Yayat et al., "Cation-sei Kaimen Kasseizai Kyozon Silica Sol-Gel-Kei ni Okeru Meso-ko Keisei", The Ceramic Society of Japan, 2000 Nen Nenkai Koen Yokoshu, 2000, March, page 96 | 1-4,7<br>5,6,8 |
| Y | Kazuki NAKANISHI et al., "SilicaGel no Momoku Hanno ni yoru Meso Saiko no Keisei (1), Nyoso no Netsu Bunkai", CSJ: The Chemical Society of Japan Dai 72 Shunki Nenkai-Koen Yokoshu I, 1997 March, page 143 | 2 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 August, 2005 (04.08.05) | 23 August, 2005 (23.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 770 063 A1**

| INTERNATIONAL SEARCH REPORT | International application No. |
|---|---|
| | PCT/JP2005/009215 |

C (Continuation).   DOCUMENTS CONSIDERED TO BE RELEVANT

| Category* | Citation of document, with indication, where appropriate, of the relevant passages | Relevant to claim No. |
|---|---|---|
| A | Kazuki NAKANISHI et al., "Kaimen Kasseizai o Fukumu Silicagel-Kei no Sobunri (II) Hiion-Sei Shinsui Sacho no Eikyo", CSJ: The Chemical Society of Japan Dai 69 Kai Shunki Nenkai-Koen Yokoshu I, 1995 March, page 189 | 1-8 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8001996 A
- JP 29952 B
- JP 7001995 A
- JP 41374 A